# EUROPEAN PATENT SPECIFICATION

(11) **EP 3 407 265 B1**
(45) Date of publication and mention of the grant of the patent: **10.11.2021**
(21) Application number: 16885906.4
(22) Date of filing: 01.04.2016
(51) Int. Cl.: G06N 3/063, G06N 3/02, G06N 3/04

(54) **DEVICE AND METHOD FOR EXECUTING FORWARD CALCULATION OF ARTIFICIAL NEURAL NETWORK**
VORRICHTUNG UND VERFAHREN ZUR DURCHFÜHRUNG EINER VORWÄRTSBERECHNUNG EINES KÜNSTLICHEN NEURONALEN NETZWERKS
DISPOSITIF ET PROCÉDÉ PERMETTANT D'EXÉCUTER UN CALCUL DEPUIS L'ORIGINE D'UN RÉSEAU DE NEURONES ARTIFICIELS

(30) Priority: 20.01.2016 CN 201610037645
(43) Date of publication of application: 28.11.2018
(73) Proprietor: Cambricon Technologies Corporation Limited, Beijing 100191 (CN)
(72) Inventor: LIU, Shaoli, Beijing 100190 (CN); GUO, Qi, Beijing 100190 (CN); CHEN, Yunji, Beijing 100190 (CN); CHEN, Tianshi, Beijing 100190 (CN)
(74) Representative: Huang, Liwei
(86) International application number: PCT/CN2016/078281
(87) International publication number: WO 2017/124642

(56) References cited:
- CN-A- 104 145 281
- CN-A- 105 095 966
- CN-A- 105 184 366
- CN-U- 201 927 073
- US-A- 5 524 175
- Philipp Ff: "Quicknet on MultiSpert: Fast Parallel Neural Network Training", , 1 December 1997 (1997-12-01), XP055609263, Retrieved from the Internet: URL:https://pdfs.semanticscholar.org/1370/ 28d000afc312acd3128e603a24bfe0f872bf.pdf
- HAMALAINEN T ET AL: "TUTNC: a general purpose parallel computer for neural network computations", MICROPROCESSORS AND MICROSYSTEMS, IPC BUSINESS PRESS LTD. LONDON, GB, vol. 19, no. 8, 1 October 1995 (1995-10-01), pages 447-465, XP004032581, ISSN: 0141-9331, DOI: 10.1016/0141-9331(96)82010-2

## Description

### Technical Field

The present disclosure is generally directed to the technical field of artificial neural network, and in particularly to an apparatus and method for performing a forward computation of artificial neural networks.

### Background Art

Multi-layer artificial neural networks are widely used in fields like pattern recognition, image processing, function approximation and optimized computation etc. The mutate-layer artificial neural networks attract more and more attention from the academic and industrial fields due to its higher recognition accuracy and better parallelizability.

A known method for supporting the forward computation of multi-layer artificial neural networks is to use a general-purpose processor (GPP). This method supports the above algorithm by using a general-purpose register (GPR) file and general purpose functional components to execute general purpose instructions. One of the disadvantages of this method is that the low operation performance of a single general-purpose processor cannot meet the needs for the operation performance of the general multi-layer artificial neural networks. Meanwhile, if multiple general-purpose processors are working concurrently, the intercommunication between the general-purpose processors (GPP) will become a bottleneck of performance. In addition, the general-purpose processors need to transcode the forward computation of multi-layer artificial neural networks into a long sequence of operation and access instructions and this front-end transcoding of processors causes relatively high-power consumption overhead.

Philipp Ff: "Quicknet on Multisport: fast parallel neural network training", 1 December 1997 (1997-12-01), relates to neural network parallel multi-layer processings.

Another known method for supporting a backwards training of multi-layer artificial neural networks is to use a graphics processing unit (GPU). This method supports the above algorithm by using a general-purpose register file and general-purpose stream processing units to execute general purpose SIMD instructions. Since GPU is specifically used for executing graphics and image operations and scientific computation, it does not provide specific support to the operation of multi-layer artificial neural networks, and thus a lot front-end transcoding is still required to perform the operation of multi-layer artificial neural networks, and as a result large additional overhead are incurred. Besides, the GPU only has a relatively small on-chip cache, model data (weight) of multi-layer artificial neural networks need to be carried repeatedly from outside of the chip, and off-chip bandwidth becomes the main bottleneck for its performance and causes huge power consumption overhead as well. Hamalainen T. et al: "TUTNC: a general purpose parallel computer for neural network computations", 1 October 1995 (1995-10-01) presents the architecture and realization of the TUTNC (Tampere University of Technology Neural Computer) system.

TUTNC is designed for parallel computation and it is suitable for several artificial neural network (ANN) algorithms. Processors are connected via a tree shaped communication network, which can be programmed to perform efficient global operations.

### Summary

The present invention is defined by the appended claims.

### Brief Description of the Drawings

In order to facilitate a better understanding of the present disclosure and its advantages, the following description is presented with reference to the accompanying figures, wherein:
Fig.1 illustrates a block diagram of the overall structure of the apparatus for performing a forward computation of artificial neural networks according to embodiments of the present disclosure.
Fig.2 illustrates the structure of the H tree module in the apparatus for performing a forward operation of artificial neural networks according to embodiments of the present disclosure.
Fig.3 illustrates a block diagram of the structure of the master computation module in the apparatus for performing a forward computation of artificial neural networks according to embodiments of the present disclosure.
Fig.4 is a block diagram of the structure of the slave computation modules in the apparatus for performing a forward computation of artificial neural networks according to embodiments of the present disclosure.
Fig.5 is a block diagram of the forward computation process of neural networks according to embodiments of the present disclosure.

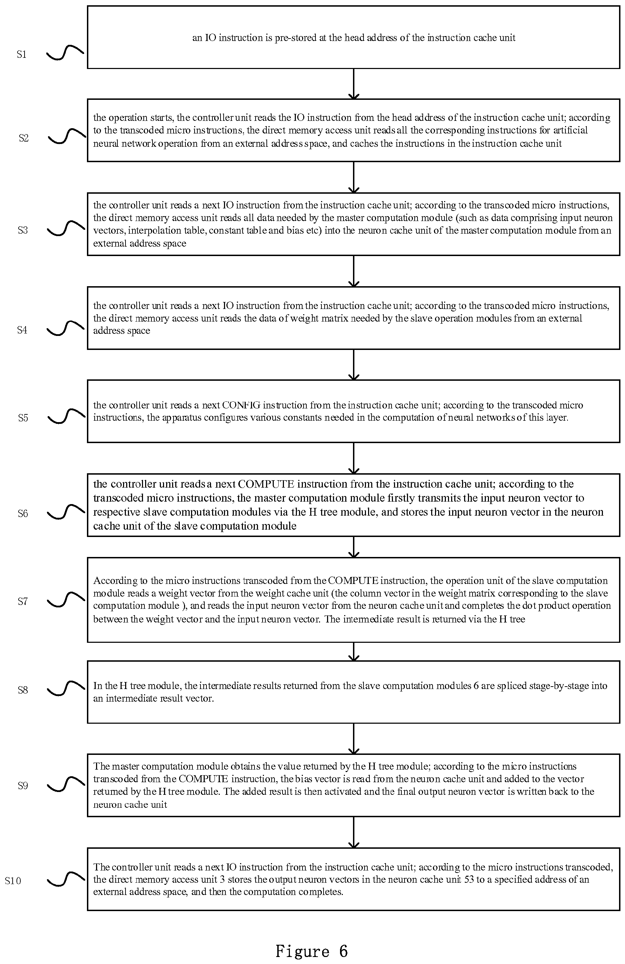

Fig.6 is a flow diagram of the operation of single-layer artificial neural network according to embodiments of the present disclosure.

In all the accompanying figures, identical apparatus, components, units and the like are referenced by identical reference numbers.

### Embodiments

With reference to the following detailed description to illustrative embodiments of the present disclosure taken in conjunction with the accompanying figures, other aspects, merits and outstanding features of the present disclosure will become obvious to persons skilled in the art.

In the present disclosure, the term "comprising" and "including" as well as their derivatives mean to contain rather than limit; the term "or", which is also inclusive, means and/or.

In this specification, the following various embodiments used to illustrate principles of the present disclosure are only for illustrative purpose, and thus should not be understood as limiting the scope of the present disclosure by any means. The following description taken in conjunction with the accompanying drawings is to facilitate a thorough understanding to the illustrative embodiments of the present invention defined by the claims. Besides, identical reference numbers refer to identical function and operation throughout the accompanying drawings.

The forward computation of multi-layer artificial neural networks according to embodiments of the present disclosure comprises multiple neurons in two or more layers. For each layer, a dot product operation is performed at first to an input neuron vector and a weight vector and from the result is obtained an output neuron through an activation function, wherein the activation function may be sigmoid function, tanh function, relu function and softmax function etc.

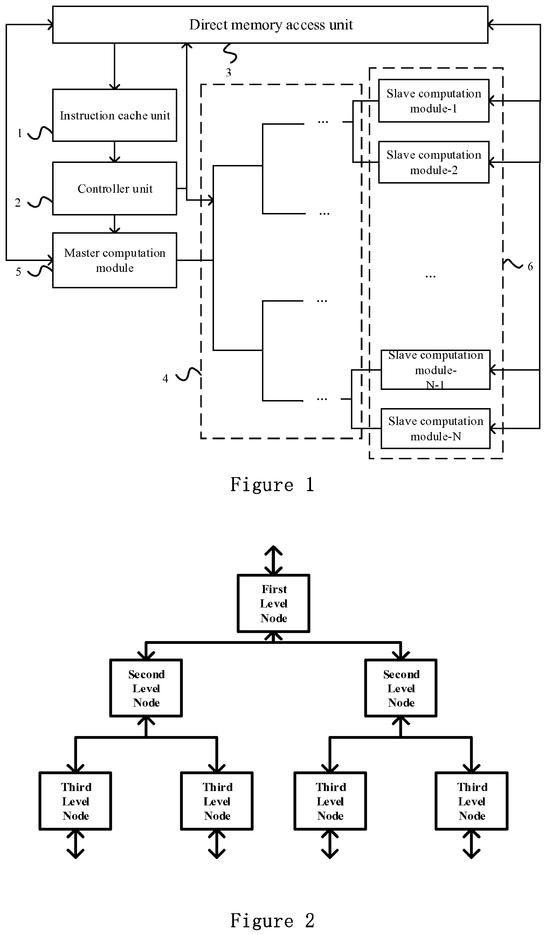

Fig. 1 is an illustrative block diagram of the overall structure of the apparatus for performing a forward computation of artificial neural networks according to embodiments of the present disclosure. As shown in Fig. 1, the apparatus comprises an instruction cache unit 1, a controller unit 2, a direct memory access unit 3, an H tree module 4, a master computation module 5 and multiple slave operation modules 6. The instruction cache unit 1, the controller unit 2, the direct memory access unit 3, the H tree module 4, the master computation module 5 and the slave computation modules 6 all can be implemented via hardware circuits (for example, an application-specific integrated circuit (ASIC)).

The instruction cache unit 1 reads instructions by the direct memory access unit 3 and caches the instructions being read.

The controller unit 2 reads instructions from the instruction cache unit 1, and transcodes the instructions into micro instructions for controlling operations of other modules; wherein, the other modules are modules like the direct memory access unit 3, the master computation module 5 and the slave computation modules 6 etc.

The direct memory access unit 3 is capable of accessing an external address space, directly reading/writing data into respective cache units within the apparatus to achieve the loading and storing of data.

Fig.2 illustrates the structure of the H tree module 4. The H tree module 4 forms a data channel between the master computation module 5 and the multiple slave computation modules 6 and has the structure of H tree. The H tree is a binary tree channel formed by multiple nodes, with each node transmitting the upstream data to two downstream nodes and combining data returned by the two downstream nodes and transmitting back to the upstream node. For example, in the initial computing stage of artificial neural networks in each layer, the neuron data in the master computation module 5 are transmitted to respective slave computation modules 6 via the H tree module 4; when the computation process of the slave computation modules 6 completes, the values of neurons output by each slave computation module will be spliced into a complete vector comprised of neurons stage-by-stage in the H tree as an intermediate result vector. Taking the neural network's full connection layer as an example, if the number of slave computation modules in the apparatus is N, then the intermediate result vector is segmented by N with each segment containing N elements, and the i^{th} slave computation module computes the i^{th} element in each segment. The N elements arc spliced into a vector in the length of N via the H tree module and the vector is transmitted back to the master computation module. Therefore, if there are only N output neurons in the network, then each slave operation unit only needs to output the value of a single neuron; if the number of output neurons in the network is m*N, then each slave operation unit needs to output the values of m neurons.

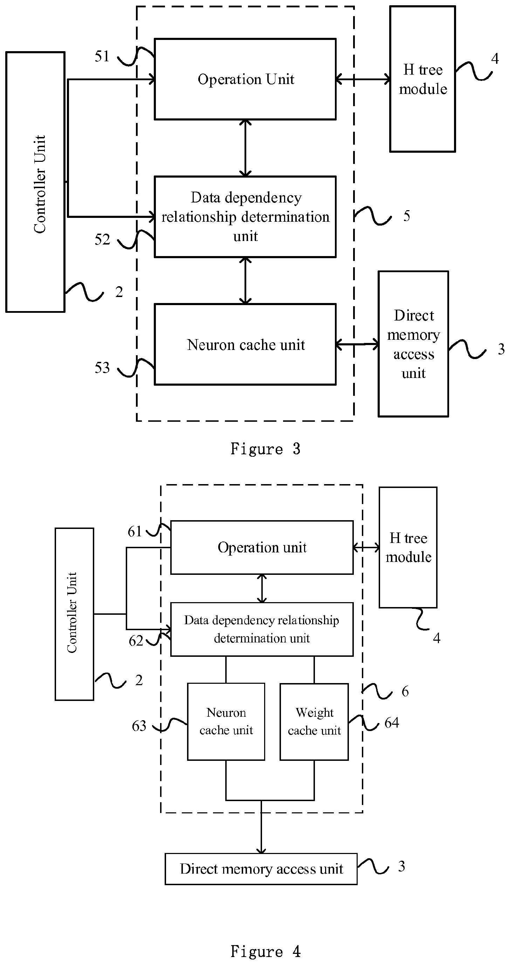

Fig.3 is an illustrative block diagram of the structure of the master computation module 5 in the apparatus for performing the forward computation of artificial neural networks according to embodiments of the present disclosure. As shown in Fig. 3, the master computation module 5 comprises an operation unit 51, a data dependency relationship determination unit 52 and a neuron cache unit 53.

The neuron cache unit 53 is configured to cache the input data and output data used by the master computation module 5 in the computing process. The operation unit 51 conducts various operation functionality of the master computation module 5. The data dependency relationship determination unit 52 is a port for the operation unit 51 to read/write the neuron cache unit 53 and is capable of ensuring the read-write consistency of data in the neuron cache unit. Meanwhile, the data dependency relationship determination unit 52 is also responsible for transmitting the read data to the slave computation modules via the H tree module 4, and the output data of the slave computation modules 6 are directly transmitted to the operation unit 51 via the H tree module 4. The instructions output by the controller unit 2 are transmitted to the operation unit 51 and the data dependency relationship determination unit 52 so as to control their operations.

Fig. 4 is an illustrative block diagram of the structure of the slave computation modules 6 in the apparatus for performing the forward computation of artificial neural networks according to embodiments of the present disclosure. As shown in Fig. 4, each slave computation module 6 comprises an operation unit 61, a data dependency relationship determination unit 62, a neuron cache unit 63 and a weight cache unit 64.

The operation unit 61 receives micro instructions transmitted from the controller unit 2 and performs arithmetic logical operations.

The data dependency relationship determination unit 62 is responsible for the reading/writing operation to the neuron cache unit in the computing process. Before performing the reading/writing operation, the data dependency relationship determination unit 62 will at first ensure that there is no conflict in the reading/writing consistency in the data used by the instructions. For example, all micro instructions transmitted to the data dependency relationship determination unit 62 will be stored in an instruction queue within the data dependency relationship determination unit 62. In this instruction queue, if the scope to be read according to the reading instruction is in conflict with the scope to be written according to the writing instruction in the front position of the instruction queue, then the instruction cannot be executed unless the writing instruction that it depends on has been executed.

The neuron cache unit 63 caches the input neuron vector data and output neuron value data of the slave computation modules 6.

The weight cache unit 64 caches the weight data needed by the slave computation modules 6 in the computing process. For each slave computation module 6, it only stores the weight between all the input neurons and a part of the output neurons. Taking the full connection layer for example, the output neurons are segmented according to the number N of slave operation units, the weight corresponding to the n^{th} output neuron in each segment is stored in the n^{th} slave operation unit.

The slave computation modules 6 implement the first half of the forward computation process of artificial neural networks of each layer, wherein the first half can work in parallel. Taking the artificial neural network full connection layer (MLP) as an example, the process is y=f(wx+b), wherein the multiplication between the weight matrix w and the input neuron vector x can be divided into unrelated parallel computing subtasks, "out" and "in" are column vectors, and each slave computation module 6 only calculates the products of the corresponding partial scaling elements in the column vector "in" and a corresponding column in the weight matrix w, each resulted output vector is a partial sum of the final result to be accumulated. These partial sums are added to another in the H tree module 4 stage-by-stage to obtain the final result. Therefore, the computing process becomes a process of calculating the partial sums in parallel and a latter process of accumulation. Each slave computation module 6 calculates the output neuron values, and all the output neuron values are spliced together into an intermediate result vector within the H tree module 4. Each slave computation module 6 only needs to calculate its corresponding output neuron value in the intermediate result vector y. The H tree module 4 sums the neuron values output by all the slave computation modules 6 to obtain the final intermediate result vector y. The master computation module 5 performs the subsequent operations based on the intermediate result vector y, such as adding bias, pooling (for example the max-pooling (MAXPOOLTNG)) or average pooling (AVGPOOLING)), activating and sampling etc.

The embodiments of the present disclosure also provide an instruction set for performing the forward computation of artificial neural networks in the above-mentioned apparatus. The instruction set comprises a CONFIG instruction, a COMPUTE instruction, an IO instruction, a NOP instruction, a JUMP instruction and a MOVE instruction, wherein:
The CONFIG instruction configures various constants required in the operation of the current layer before the computation of artificial neural networks of each layer starts;
The COMPUTE instruction performs the arithmetic logical calculation of artificial neural networks of each layer;
The IO instruction implements the reading of input data required by the computation from an external address space and stores the data back to an external address space after the computation completes;
The NOP instruction is responsible for emptying the micro instructions currently loaded in all the internal cache queue for micro instructions to ensure that all instructions before the NOP instruction are all executed. The NOP instruction itself does not comprise any operation;
The JUMP instruction is responsible for a jump of the address of a next instruction to be read by the controller from the instruction cache unit, in order to implement a jump of the control flow.
The MOVE instruction is responsible for carrying data at a certain address in an internal address space of the apparatus to another address of the internal address space of the apparatus. This process is independent from the operation unit and thus will not occupy resources of the operation unit when executed.

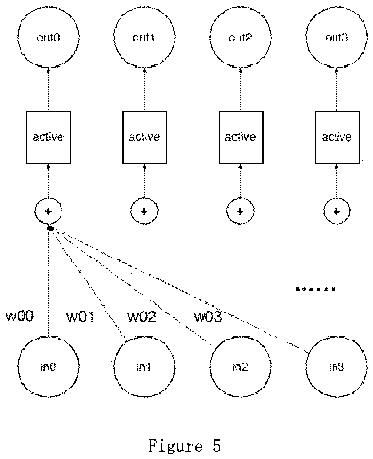

Fig. 5 is an illustrative block diagram of the forward computation process of artificial neural networks according to embodiments of the present disclosure. In different slave computation modules 6, a dot product operation is at first performed to the input neuron vector and the weight vectors of the slave computation modules 6 respectively to obtain the corresponding output neuron values. All these output neuron value constitute an intermediate result vector. This intermediate result vector can produce the final output neuron vector of neural network of this layer by adding a bias vector and performing an activation operation, the formula is out=f (w*in+b), wherein "out" is an output neuron vector, "in" is an input neuron vector, b is a bias vector, "w" is a weight matrix, and f is an activation function. The weight vector of each slave computation module 6 is a column vector in the weight matrix which corresponds to said slave computation module 6. The H tree module transmits the input neuron vector [in0,...,inN] to all the slave operation units and the input neuron vector is temporarily stored in the neuron cache unit. For the i^{th} slave operation unit, the dot product between its corresponding weight vector [w_i0,...,w_iN] and the input neuron vector is calculated. The results output by the slave operation units are spliced into a complete output vector via the H tree module and the output vector will be transmitted back to the master operation unit. The activation operation is performed in the master operation unit to obtain the final output neuron vectors [out0,out1,out2,...,οutN].

Fig. 5 is a flow diagram of the forward computation process of a single-layer artificial neural network according to one embodiment of the present disclosure. This flow diagram describes the forward computation process of a single-layer neural network shown in Fig.4 implemented by the apparatus and instruction set of the present disclosure.

In step S1, an IO instruction is prc-storcd at the head address of the instruction cache unit 1.

In step S2, the operation starts, the controller unit 2 reads the IO instruction from the head address of the instruction cache unit 1; according to the transcoded micro instructions, the direct memory access unit 3 reads all the corresponding instructions for artificial neural network operation from an external address space and caches the instructions in the instruction cache unit 1.

In step S3, the controller unit 2 reads a next IO instruction from the instruction cache unit; according to the transcoded micro instructions, the direct memory access unit 3 reads all data needed by the master computation module 5 (such as data comprising input neuron vectors, interpolation table, constant table and bias etc.) into the neuron cache unit 53 of the master computation module 5 from an external address space.

In step S4, the controller unit 2 reads a next IO instruction from the instruction cache unit; according to the transcoded micro instructions, the direct memory access unit 3 reads the data of weight matrix needed by the slave operation modules 6 from an external address space.

In step S5, the controller unit 2 reads a next CONFIG instruction from the instruction cache unit; according to the transcoded micro instructions, the apparatus configures various constants needed in the computation of neural networks of this layer. For example, the operation units 51 and 61 configure the values of the registers within the units according to the parameters in the micro instructions. The parameters, for example, comprise data of calculation accuracy setting and activation function of this layer (for instance, the accuracy bit of calculation of current layer, the rang parameter of Lrn layer algorithm, the reciprocal of the window size of the AveragePooling layer algorithm).

In step S6, the controller unit 2 reads a next COMPUTE instruction from the instruction cache unit; according to the transcoded micro instructions, the master computation module 5 firstly transmits the input neuron vector to respective slave computation modules 6 via the H tree module and stores the input neuron vector in the neuron cache unit 63 of the slave computation module 6.

In Step S7, according to the micro instructions transcoded from the COMPUTE instruction, the operation unit 61 of the slave computation module 6 reads a weight vector from the weight cache unit 64 (the column vector in the weight matrix corresponding to the slave computation module 6) and reads the input neuron vector from the neuron cache unit and completes the dot product operation between the weight vector and the input neuron vector. The intermediate result is returned via the H tree.

In step S8, in the H tree module 4, the intermediate results returned from the slave computation modules 6 are spliced stage-by-stage into an intermediate result vector.

In step S9, the master computation module 5 obtains the value returned by the H tree module 4; according to the micro instructions transcoded from the COMPUTE instruction, the bias vector is read from the neuron cache unit 53 and added to the vector returned by the H tree module 4. The added result is then activated and the final output neuron vector is written back to the neuron cache unit 53.

In step S10, the controller unit reads a next IO instruction from the instruction cache unit; according to the micro instructions transcoded, the direct memory access unit 3 stores the output neuron vectors in the neuron cache unit 53 to a specified address of an external address space, and then the computation completes.

For a multi-layer artificial neural network, its implementation is similar to the implementation of a single-layer neural network. When the execution of the artificial neural network of the previous layer completes, the operation instruction of the next layer uses the output neuron address of the previous layer stored in the master operation unit as the input neuron address of this layer. Similarly, the weight address and bias address in the instruction will turn into the addresses corresponding to the current layer.

The utilization of the apparatus and instruction set for performing the forward computation of artificial neural networks eliminates the defects caused by lower performance of CPU and GPU operation as well as high overhead of front-end transcoding, which effectively improvs the support to forward computations of multi-layer artificial neural networks.

In addition, the utilization of a specific on-chip cache for the forward computation of multi-layer artificial neural network thoroughly explores the reusability of input neurons and weight data and avoids the repeatedly reading of data from memory. The requirement for memory access bandwidth is also lowered and thus the memory bandwidth will not become a bottleneck for performance of the forward computation of multi-layer artificial neural networks.

The process or method described in the above accompanying figures can be performed by process logic including hardware (for example, circuit, specific logic etc.), firmware, software (for example, a software being externalized in non-transitory computer-readable medium), or the combination of the above two. Although the process or method is described above in a certain order, it should be understood that some operations described may also be performed in different orders. In addition, some operations may be executed concurrently rather than in order.

In the above description, cach embodiment of the present disclosure is illustrated with reference to certain illustrative embodiments. Apparently, various modifications may be made to each embodiment without going beyond the scope of the claims. Correspondingly, the description and accompanying figures should be understood as illustration only rather than limitation.

## Claims

1. An apparatus for performing forward computation of an artificial neural network, the apparatus comprising a controller unit (2),
the apparatus further comprising a master computation module (5), multiple slave computation modules (6), and an H tree module (4), wherein:
the controller unit (2) is configured to read instructions and decode the instructions into micro instructions for controlling the H tree module, the master computation module and the multiple slave computation modules;
the master computation module (5) is configured to transmit an input neuron vector of a layer of the artificial neural network to all of the multiple slave computation modules (6) via the H tree module (4);
wherein the multiple slave computation modules (6) are configured to utilize the same input neuron vector and respectively different weight vectors to parallel-compute respective output neuron values;
wherein the H tree module (4) is configured to, after each of the multiple slave computation modules (6) completing its computation, splice the respective output neuron values of the multiple slave computation modules stage-by-stage into an intermediate result vector; and
wherein the master computation module (5) performs any one of the following operations on the intermediate result vector:
bias-adding operation, which adds a bias to the intermediate result vector;
activating the intermediate result vector, wherein the activation function active is any one of sigmoid, tanh, relu, or softmax;
sampling operation, which compares the intermediate result vector with a random number, and outputs 1 if it is greater than the random number, and outputs 0 if it is less than the random number; or
pooling operation, including a max-pooling or an average pooling, AVGPOOLING;
wherein the H tree module (4) forms a data channel between the master computation module (5) and the multiple slave computation modules (6).

2. The apparatus of claim 1, further comprising:
an instruction cache unit (1), configured to read instructions via a direct memory access unit (3) and cache the instructions being read;
the direct memory access unit (3), configured to write data into corresponding data cache units of the master computation module and the respective slave computation modules from an external address space or read data from the data cache units to the external address space;
wherein
the controller unit (2) is configured to read instructions from the instruction cache unit.

3. The apparatus of any one of claims 1-2, wherein the slave computation modules (6) copmrises an input neuron cache unit configured to cache an input neuron data.

4. The apparatus of any one of claims 1-3, wherein the H tree module (4) has a structure of H tree, the H tree is a binary tree channel formed by multiple nodes, with each node transmitting the upstream data to two downstream nodes and splicing data returned by the two downstream nodes and transmitting back to the upstream node.

5. The apparatus of any one of claims 1-4, wherein the master computation module (5) comprises an operation unit (51), a data dependency relationship determination unit (52) and a neuron cache unit (53), wherein
the neuron cache unit (53) is configured to cache input data and output data used by the master computation module in the computing process;
the operation unit (51) is configured to receive an output gradient vector from the H tree module and conducts various operation functionalities of the master computation module;
the data dependency relationship determination unit (52) is a port for the operation unit to read/write the neuron cache unit and ensures there is no consistency conflict in the data reading/writing of the neuron cache unit, and is also responsible for transmitting the input neuron vector read from the neuron cache unit to the slave computation modules via the H tree module.

6. The apparatus of any one of claims 1-5, wherein each slave computation module (6) comprises an operation unit (61), a data dependency relationship determination unit (62), a neuron cache unit (63) and a weight cache unit (64), wherein
the operation unit (61) is configured to receive micro instructions transmitted from the controller unit and performs arithmetic logical operations;
the data dependency relationship determination unit (62) is responsible for the reading/writing operation to the neuron cache unit and the weight cache unit in the computing process, ensuring there is no consistency conflict in the reading/writing of the neuron cache unit and the weight cache unit;
the neuron cache unit (63) is configured to cache the input neuron vector data and output neuron value obtained from the computation of the slave computation modules; and
the weight cache unit (64) is configured to cache the weight vector needed by the slave computation modules in the computing process.

7. The apparatus of claim 5 or 6, the following method is used to ensure there is no consistency conflict in the data reading/writing: determining whether there is dependent relationship between the data of a micro-instruction which has not been executed and the data of the micro-instruction which is being executed, if there is no dependent relationship, allowing the micro-instruction which has not been executed to be launched immediately, otherwise, the micro-instruction which has not been executed will not be allowed to lauch until the execution of all the micro-instructions upon which that micro-instruction which has not been executed depend is completed.

8. The apparatus of any one of claims 1-7, wherein the instructions comprising:
a CONFIG instruction for configuring various constants required in the operation of the current layer before the computation of artificial neural networks of each layer starts;
a COMPUTE instruction for performing the arithmetic logical calculation of artificial neural networks of each layer;
an IO instruction for implementing the reading of input data required by the computation from an external address space and storing the data back to the external address space after the computation completes;
a NOP instruction for emptying the micro instructions currently loaded in all the internal cache queue for micro instructions to ensure that all instructions before the NOP instruction are all executed;
a JUMP instruction for a jump of the address of a next instruction to be read by the controller from the instruction cache unit, in order to implement a jump of the control flow.
a MOVE instruction for carrying data at a certain address in an internal address space of the apparatus to another address of the internal address space of the apparatus.

9. The apparatus of any one of claims 1-8, wherein the apparatus is configured to perform backwards training of a multi-layer artificial neural network.

10. The apparatus of any one of claims 2-9, wherein at least one of the instruction cache unit (1), the controller unit (2), the direct memory access unit (3), the H tree module (4), the master computation module (5), and the slave computation modules (6) adopt ASIC.

11. A method of performing forward computation of an artificial neural network, the method comprising the following steps:
a controller unit (2) reading instructions and decoding the instructions into micro instructions for controlling an H tree module (4), a master computation module (5) and multiple slave computation modules (6);
the master computation module (5) transmitting an input neuron vector of a layer of the artificial neural network to all of the multiple slave computation modules (6) via the H tree module (4);
the multiple slave computation modules (6) utilizing the same input neuron vector and respectively different weight vectors to parallel-compute respective output neuron values;
the H tree module (4), after each of the multiple slave computation modules (6) completing its computation, splicing the respective output neuron values of the multiple slave computation modules stage-by-stage into an intermediate result
wherein the master computation module (5) performs any one of the following operations on the intermediate result vector:
bias-adding operation, which adds a bias to the intermediate result vector;
activating the intermediate result vector, wherein the activation function active is any one of sigmoid, tanh, relu, or softmax;
sampling operation, which compares the intermediate result vector with a random number, and outputs 1 if it is greater than the random number, and outputs 0 if it is less than the random number; or
pooling operation, including a max-pooling or an average pooling, AVGPOOLING;
wherein the H tree module (4) forms a data channel between the master computation module (5) and the multiple slave computation modules (6).

12. The method of claim 11, further comprising:
an instruction cache unit (1) reading instructions via a direct memory access unit (3) and caching the instructions being read;
the direct memory access unit (3) writing data into corresponding data cache units of the master computation module and the respective slave computation modules from an external address space or reading data from the data cache units to the external address space;
wherein the controller unit (2) reads instructions from the instruction cache unit.

13. The method of any one of claims 11-12, wherein the slave computation modules (6) comprise an input neuron cache unit configured to cache the input neuron data.

14. The method of any one of claims 11-13, wherein the H tree module (4) has a structure of H tree, the H tree is a binary tree channel formed by multiple nodes, with each node transmitting the upstream data to two downstream nodes and splicing data returned by the two downstream nodes and transmitting back to the upstream node.

15. The method of any one of claims 11-14, wherein,
a neuron cache unit (53) included by the master computation module (5) caches input data and output data used by the master computation module in the computing process;
an operation unit (51) included by the master computation module (5) receives an output gradient vector from the H tree module and conducts various operation functionalities of the master computation module;
an data dependency relationship determination unit (52) included by the master computation module (5) is a port for the operation unit to read/write the neuron cache unit and ensures there is no consistency conflict in the data reading/writing of the neuron cache unit, and is also responsible for transmitting the input neuron vector read from the neuron cache unit to the slave computation modules via the H tree module.

16. The method of any one of claims 11-15, wherein,
an operation unit (61) included by the slave computation modules (6) receives micro instructions transmitted from the controller unit and performs arithmetic logical operations;
a data dependency relationship determination unit (62) included by the slave computation modules (6) is responsible for the reading/writing operation to the neuron cache unit and the weight cache unit in the computing process, ensuring there is no consistency conflict in the reading-writing of the neuron cache unit and the weight cache unit;
a neuron cache unit (63) included by the slave computation modules (6) caches the input neuron vector data and output neuron value obtained from the computation of the slave computation modules; and
a weight cache unit (64) included by the slave computation modules (6) caches the weight vector needed by the slave computation modules in the computing process.

17. The method of claims 15 or 16, the following method is used to ensure there is no consistency conflict in the reading/writing: determining whether there is dependent relationship between the data of a micro-instruction which has not been executed and the data of the micro-instruction which is being executed, if there is no dependent relationship, allowing the micro-instruction which has not been executed to be launched immediately, otherwise, the micro-instruction which has not been executed will not be allowed to lauch until the execution of all the micro-instructions upon which that micro-instruction which has not been executed depend is completed.

18. The method of any one of claims 11-17, wherein the instructions comprising:
a CONFIG instruction for configuring various constants required in the operation of the current layer before the computation of artificial neural networks of each layer starts;
a COMPUTE instruction for performing the arithmetic logical calculation of artificial neural networks of each layer;
an IO instruction for implementing the reading of input data required by the computation from an external address space and storing the data back to the external address space after the computation completes;
a NOP instruction for emptying the micro instructions currently loaded in all the internal cache queue for micro instructions to ensure that all instructions before the NOP instruction are all executed;
a JUMP instruction for a jump of the address of a next instruction to be read by the controller from the instruction cache unit, in order to implement a jump of the control flow.
a MOVE instruction for carrying data at a certain address in an internal address space of the apparatus to another address of the internal address space of the apparatus.

## Patentansprüche

1. Vorrichtung zum Durchführen einer Vorwärtsberechnung eines künstlichen neuronalen Netzwerks, wobei die Vorrichtung eine Steuereinheit (2) umfasst, wobei die Vorrichtung ferner ein Master-Berechnungsmodul (5), mehrere Slave-Berechnungsmodule (6) und ein H-Baum-Modul (4) aufweist, wobei:
die Steuereinheit (2) dafür ausgebildet ist, Anweisungen zu lesen und die Anweisungen in Mikrobefehle zum Steuern des H-Baummoduls, des Master-Berechnungsmoduls und der mehreren Slave-Berechnungsmodule zu dekodieren;
das Master-Berechnungsmodul (5) dafür ausgebildet ist, einen Eingangsneuronenvektor einer Schicht des künstlichen neuronalen Netzes über das H-Baum-Modul (4) an alle der mehreren Slave-Berechnungsmodule (6) zu übertragen;
wobei die mehreren Slave-Berechnungsmodule (6) dafür ausgebildet sind, denselben Eingangsneuronenvektor und jeweils unterschiedliche Gewichtungsvektoren zu verwenden, um jeweilige Ausgangsneuronenwerte parallel zu berechnen;
wobei das H-Baummodul (4) dafür augebildet ist, nachdem jedes der mehreren Slave-Berechnungsmodule (6) seine Berechnung abgeschlossen hat, die jeweiligen Ausgangsneuronenwerte der mehreren Slave-Berechnungsmodule stufenweise in einen Zwischenergebnisvektor zu spleißen; und
wobei das Master-Berechnungsmodul (5) eine der folgenden Operationen an dem Zwischenergebnisvektor durchführt:
eine Spannungs-Hinzufügungsoperation, die dem Zwischenergebnisvektor eine Spannung hinzufügt;
Aktivieren des Zwischenergebnisvektors, wobei die Aktivierungsfunktion aktiv eine aus einer Sigmoid-, Tanh-, Relu- oder Softmax-Funktion ist;
eine Abfrage-Operation, die den Zwischenergebnisvektor mit einer Zufallszahl vergleicht und 1 ausgibt, wenn er größer als die Zufallszahl ist, und 0 ausgibt, wenn er kleiner als die Zufallszahl ist; oder
eine Pooling-Operation, einschließlich eines Max-Poolings oder eines durchschnittlichen Poolings, AVGPOOLING;
wobei das H-Baum-Modul (4) einen Datenkanal zwischen dem Master-Berechnungsmodul (5) und den mehreren Slave-Berechnungsmodulen (6) ausbildet.

2. Vorrichtung gemäß Anspruch 1, ferner umfassend:
eine Anweisungs-Cache-Einheit (1), die dafür ausgebildet ist, Anweisungen über eine Direktspeicherzugriffseinheit (3) zu lesen und die gelesenen Anweisungen zwischen zu speichern;
die Direktspeicherzugriffseinheit (3), die ausgebildet ist zum Schreiben von Daten in entsprechende Datencacheeinheiten des Master-Berechnungsmoduls und der jeweiligen Slave-Berechnungsmodule aus einem externen Adressraum oder zum Lesen von Daten aus den Datencacheeinheiten in den externen Adressraum;
wobei
die Steuereinheit (2) dazu ausgebildet ist, Anweisungen aus der Anweisungscacheeinheit auszulesen.

3. Vorrichtung gemäß einem der Ansprüche 1 bis 2, wobei die Slave-Berechnungsmodule (6) eine Eingangsneuronen-Cache-Einheit umfassen, die dazu audgebildet ist, Eingangsneuronendaten zwischen zu speichern.

4. Vorrichtung gemäß einem der Ansprüche 1 bis 3, wobei das H-Baum-Modul (4) eine H-Baum-Struktur hat, der H-Baum ein binärer Baumkanal ist, der durch mehrere Knoten gebildet wird, wobei jeder Knoten die vorgelagerten Daten an zwei nachgelagerte Knoten überträgt und Daten spleißt, die von den zwei nachgelagerten Knoten zurückgegeben werden, und an den vorgelagerten Knoten zurücksendet.

5. Vorrichtung gemäß einem der Ansprüche 1-4, wobei das Master-Berechnungsmodul (5) eine Operationseinheit (51), eine Bestimmungseinheit für Datenabhängigkeitsbeziehungen (52) und eine Neuronen-Cache-Einheit (53) umfasst, wobei
die Neuronen-Cache-Einheit (53) dazu ausgebildet ist, Eingabedaten und Ausgabedaten, die von dem Master-Berechnungsmodul im Rechenprozess verwendet werden, zwischen zu speichern;
die Operationseinheit (51) dafür ausgebildet ist, einen Ausgabegradientenvektor von dem H-Baummodul zu empfangen und verschiedene Operationsfunktionalitäten des Master-Berechnungsmoduls durchzuführen;
die Bestimmungseinheit für Datenabhängigkeitsbeziehungen (52) ein Port für die Operationseinheit zum Lesen/Schreiben in der Neuronen-Cache-Einheit ist und sicherstellt, dass kein Übereinstimmungskonflikt in dem Lesen/Schreiben der Daten in der Neuronen-Cache-Einheit auftritt, und auch dafür verantwortlich ist, den von der Neuronen-Cache-Einheit gelesenen Eingangsneuronenvektor über das H-Baum-Modul an die Slave-Berechnungsmodule zu übertragen.

6. Vorrichtung gemäß einem der Ansprüche 1-5, wobei jedes Slave-Berechnungsmodul (6) eine Operationseinheit (61), eine Bestimmungseinheit für Datenabhängigkeitsbeziehungen (62), eine Neuronen-Cache-Einheit (63) und eine Gewichtungs-Cache-Einheit (64) umfasst, wobei die Operationseinheit (61) dafür ausgebildet ist, von der Steuereinheit gesendete Mikrobefehle zu empfangen, und sie arithmetische logische Operationen durchführt;
die Bestimmungseinheit für Datenabhängigkeitsbeziehungen (62) für den Lese-/Schreibvorgang in die Neuronen-Cache-Einheit und die Gewichtungs-Cache-Einheit im Berechnungsprozess verantwortlich ist, um sicherzustellen, dass beim Lesen/Schreiben in der Neuronen-Cache-Einheit und der Gewichtungs-Cache-Einheit kein Übereinstimmungskonflikt besteht;
die Neuronen-Cache-Einheit (63) dafür ausgebildet ist, die EingabeneuronenVektordaten und die Ausgabeneuronenwerte, die aus der Berechnung der Slave-Berechnungsmodule erhalten wurden, zwischen zu speichern; und
die Gewichtungs-Cache-Einheit (64) dazu ausgebildet ist, den Gewichtungsvektor, der von den Slave-Berechnungsmodulen im Berechnungsprozess benötigt wird, zwischen zu speichern.

7. Vorrichtung gemäß Anspruch 5 oder 6, wobei das folgende Verfahren verwendet wird, um sicherzustellen, dass beim Lesen/Schreiben von Daten kein Übereinstimmungskonflikt auftritt: Bestimmen, ob eine abhängige Beziehung zwischen den Daten eines nicht ausgeführten Mikrobefehls und den Daten eines Mikrobefehls, der ausgeführt wird, besteht, wobei wenn keine abhängige Beziehung besteht, der nicht ausgeführte Mikrobefehl unmittelbar gestartet werden kann, andernfalls wird der nicht ausgeführte Mikrobefehl nicht gestartet, bis die Ausführung aller Mikrobefehle, von denen der nicht ausgeführte Mikrobefehl abhängt, abgeschlossen ist.

8. Vorrichtung gemäß einem der Ansprüche 1-7, wobei die Anweisungen umfassen:
eine CONFIG-Anweisung zum Konfigurieren verschiedener Konstanten, die bei der Operation der aktuellen Schicht erforderlich sind, bevor die Berechnung der künstlichen neuronalen Netzwerke jeder Schicht beginnt;
eine COMPUTE-Anweisung zum Durchführen der arithmetisch-logischen Berechnung künstlicher neuronaler Netzwerke jeder Schicht;
eine IO-Anweisung zum Implementieren des Lesens von Eingabedaten, die für die Berechnung erforderlich sind, aus einem externen Adressraum und zum Zurückspeichern der Daten in den externen Adressraum, nachdem die Berechnung abgeschlossen ist;
eine NOP-Anweisung zum Leeren der Mikroanweisungen, die aktuell in die gesamte interne Cache-Warteschlange für Mikroanweisungen geladen sind, um sicherzustellen, dass alle Anweisungen vor der NOP-Anweisung ausgeführt werden;
eine JUMP-Anweisung für einen Sprung der Adresse einer nächsten Anweisung, die von der Steuerung aus der Befehls-Cache-Einheit gelesen werden soll, um einen Sprung des Steuerflusses zu implementieren;
eine MOVE-Anweisung zum Übertragen von Daten an einer bestimmten Adresse in einem internen Adressraum der Vorrichtung an eine andere Adresse des internen Adressraums der Vorrichtung.

9. Vorrichtung gemäß einem der Ansprüche 1 bis 8, wobei die Vorrichtung dafür ausgebildet ist, eine Rückwärtsbewegung eines mehrschichtigen künstlichen neuronalen Netzwerks durchzuführen.

10. Vorrichtung gemäß einem der Ansprüche 2-9, wobei mindestens eine von der Anweisungs-Cache-Einheit (1), der Steuereinheit (2), der Direktspeicherzugriffseinheit (3), dem H-Baum-Modul (4), dem Master-Berechnungsmodul (5) und der Slave-Berechnungsmodule (6) ASIC verwendet.

11. Verfahren zum Durchführen einer Vorwärtsberechnung eines künstlichen neuronalen Netzwerks, wobei das Verfahren die folgenden Schritte umfasst:
eine Steuereinheit (2), die Anweisungen liest und die Anweisungen in MikroAnweisungen zum Steuern eines H-Baum-Moduls (4), eines Master-Berechnungsmoduls (5) und mehrerer Slave-Berechnungsmodule (6) decodiert;
das Master-Berechnungsmodul (5), das einen Eingabeneuronenvektor einer Schicht des künstlichen neuronalen Netzes über das H-Baum-Modul (4) an alle der mehreren Slave-Berechnungsmodule (6) überträgt;
die mehreren Slave-Berechnungsmodule (6), die denselben Eingabeneuronenvektor und jeweils unterschiedliche Gewichtungsvektoren verwenden, um jeweilige Ausgangsneuronenwerte parallel zu berechnen;
das H-Baummodul (4), das nachdem jedes der mehreren Slave-Berechnungsmodule (6) seine Berechnung abgeschlossen hat, die jeweiligen Ausgangsneuronenwerte der mehreren Slave-Berechnungsmodule stufenweise in ein Zwischenergebnis spleißt,
wobei das Master-Berechnungsmodul (5) eine der folgenden Operationen an dem Zwischenergebnisvektor durchführt:
eine Spannungs-Hinzufügungsoperation, die dem Zwischenergebnisvektor eine Spannung hinzufügt;
Aktivieren des Zwischenergebnisvektors, wobei die Aktivierungsfunktion aktiv eine aus einer Sigmoid-, Tanh-, Relu- oder Softmax-Funktion ist;
eine Abfrageoperation, die den Zwischenergebnisvektor mit einer Zufallszahl vergleicht und 1 ausgibt, wenn er größer als die Zufallszahl ist, und 0 ausgibt, wenn er kleiner als die Zufallszahl ist; oder
eine Pooling-Operation, einschließlich eines Max-Poolings oder eines durchschnittlichen Poolings, AVGPOOLING;
wobei das H-Baum-Modul (4) einen Datenkanal zwischen dem Master-Berechnungsmodul (5) und den mehreren Slave-Berechnungsmodulen (6) ausbildet.

12. Verfahren gemäß Anspruch 11, ferner umfassend:
eine Anweisungs-Cache-Einheit (1), die Anweisungen über eine Direktspeicherzugriffseinheit (3) liest und die gelesenen Anweisungen zwischenspeichert;
die Direktspeicherzugriffseinheit (3), die Daten aus einem externen Adressraum in entsprechende Daten-Cache-Einheiten des Master-Berechnungsmoduls und der jeweiligen Slave-Berechnungsmodule schreibt oder Daten aus den Daten-Cache-Einheiten in den externen Adressraum einliest;
wobei die Steuereinheit (2) Anweisungen aus der Anweisungs-Cache-Einheit ausliest.

13. Verfahren gemäß einem der Ansprüche 11-12, wobei die Slave-Berechnungsmodule (6) eine Eingangsneuronen-Cache-Einheit umfassen, die dafür ausgebildet ist, die Eingabeneuronendaten zwischen zu speichern.

14. Verfahren gemäß einem der Ansprüche 11-13, wobei das H-Baum-Modul (4) eine H-Baum-Struktur aufweist, der H-Baum ein binärer Baumkanal ist, der durch mehrere Knoten gebildet wird, wobei jeder Knoten die vorgelagerten Daten an zwei nachgelagerte Knoten überträgt und Daten spleißt, die von den zwei nachgelagerten Knoten zurückgegeben werden, und an den vorgelagerten Knoten zurücksendet.

15. Verfahren gemäß einem der Ansprüche 11-14, wobei,
eine in dem Master-Berechnungsmodul (5) enthaltene Neuronen-Cache-Einheit (53) die Eingabedaten und Ausgabedaten, die von dem Master-Berechnungsmodul in dem Berechnungsprozess verwendet werden, zwischenspeichert;
eine in dem Master-Berechnungsmodul (5) enthaltene Operationseinheit (51) einen Ausgangsgradientenvektor von dem H-Baum-Modul empfängt und verschiedene Operationsfunktionalitäten des Master-Berechnungsmoduls durchführt;
eine in dem Master-Berechnungsmodul (5) enthaltene Bestimmungseinheit für Datenabhängigkeitsbeziehungen (52), die ein Port für die Operationseinheit zum Lesen/Schreiben in der Neuronen-Cache-Einheit ist und sicherstellt, dass kein Übereinstimmungskonflikt beim Lesen/Schreiben von Daten in der Neuronen-Cache-Einheit besteht, und die auch dafür verantwortlich ist, den aus der Neuronen-Cache-Einheit ausgelesenen Eingabeneuronenvektor über das H-Baum-Modul an die Slave-Berechnungsmodule zu übertragen.

16. Verfahren gemäß einem der Ansprüche 11-15, wobei,
eine in den Slave-Berechnungsmodulen (6) enthaltene Operationseinheit (61) Mikroanweisungen empfängt, die von der Steuereinheit übertragen werden, und arithmetische logische Operationen durchführt;
eine in den Slave-Rechenmodulen (6) enthaltene Bestimmungseinheit für Datenabhängigkeitsbeziehungen (62), die für die Lese-/Schreiboperation in der Neuronen-Cache-Einheit und der Gewichtungs-Cache-Einheit in dem Berechnungsprozess verantwortlich ist, um sicherzustellen, dass beim Lesen-Schreiben in der Neuronen-Cache-Einheit und der Gewichtungs-Cache-Einheit kein Übereinstimmungskonflikt besteht;
eine in den Slave-Berechnungsmodulen (6) enthaltene Neuronen-Cache-Einheit (63), die die Eingabeneuronenvektordaten und den Ausgabeneuronenwert zwischenspeichert, die aus der Berechnung der Slave-Berechnungsmodule erhalten wurden; und
eine in den Slave-Berechnungsmodulen (6) enthaltene Gewichtungs-Cache-Einheit (64), die den Gewichtungsvektor zwischenspeichert, der von den Slave-Berechnungsmodulen im Berechnungsprozess benötigt wird.

17. Verfahren gemäß Anspruch 15 oder 16, wobei das folgende Verfahren verwendet wird, um sicherzustellen, dass beim Lesen/Schreiben kein Übereinstimmungskonflikt besteht: Bestimmen, ob eine abhängige Beziehung zwischen den Daten einer nicht ausgeführten Mikroanweisung und den Daten einer Mikroanweisung, die ausgeführt wird, besteht, wenn keine abhängige Beziehung besteht, kann die nicht ausgeführte Mikroanweisung unmittelbar gestartet werden, andernfalls wird die nicht ausgeführte Mikroanweisung nicht gestartet, bis die Ausführung aller Mikroanweisungen, von denen die nicht ausgeführte Mikroanweisung abhängt, abgeschlossen ist.

18. Verfahren gemäß einem der Ansprüche 11-17, wobei die Anweisungen Folgendes umfassen:
eine CONFIG-Anweisung zum Konfigurieren verschiedener Konstanten, die bei der Operation der aktuellen Schicht erforderlich sind, bevor die Berechnung der künstlichen neuronalen Netze jeder Schicht beginnt;
eine COMPUTE-Anweiwung zum Durchführen der arithmetisch-logischen Berechnung künstlicher neuronaler Netzwerke jeder Schicht;
eine IO-Anweisung zum Implementieren des Lesens von Eingabedaten, die für die Berechnung erforderlich sind, aus einem externen Adressraum und zum Zurückspeichern der Daten in den externen Adressraum, nachdem die Berechnung abgeschlossen ist;
eine NOP-Anweiswng zum Leeren der Mikroanweisungen, die aktuell in die gesamte interne Cache-Warteschlange für Mikroanweisungen geladen sind, um sicherzustellen, dass alle Anweisungen vor der NOP-Anweisung ausgeführt werden;
eine JUMP-Anweisung für einen Sprung der Adresse einer nächsten Anweiwung, die von der Steuerung aus der Anweiwungs-Cache-Einheit ausgelesen werden soll, um einen Sprung des Steuerflusses zu implementieren;
eine MOVE-Anweisung zum Übertragen von Daten an einer bestimmten Adresse in einem internen Adressraum der Vorrichtung an eine andere Adresse des internen Adressraums der Vorrichtung.

## Revendications

1. Dispositif pour effectuer un calcul avant d'un réseau neuronal artificiel, le dispositif comprenant une unité de commande (2),
le dispositif comprenant en outre
un module maître de calcul (5), des modules esclaves de calcul multiples (6) et un module d'arbre en H (4), dans lequel
l'unité de commande (2) est configurée pour lire des instructions et pour décoder les instructions dans des micro-instructions pour commander le module d'arbre en H, le module maître de calcul et les modules esclaves de calcul multiples ;
le module maître de calcul (5) est configuré pour transmettre un vecteur de neurone d'entrée d'une couche du réseau neuronal artificiel à tous les modules esclaves de calcul multiples (6) via le module d'arbre en H (4) ;
dans lequel les modules esclaves de calcul multiples (6) sont configurés pour utiliser le même vecteur de neurone d'entrée et des vecteurs de poids respectivement différents pour calculer parallèlement des valeurs de neurone de sortie respectives ;
dans lequel le module d'arbre en H (4) est configuré pour épisser, après que chacun des modules esclaves de calcul multiples (6) ait complété son calcul, les valeurs de neurone de sortie respectives des modules esclaves de calcul multiples étape par étape dans un vecteur de résultat intermédiaire ; et
dans lequel le module maître de calcul (5) effectue l'une quelconque des actions suivantes avec le vecteur de résultat intermédiaire :
une action d'ajouter une tension, qui ajoute une tension au vecteur de résultat intermédiaire ;
activer le vecteur de résultat intermédiaire, dans lequel la fonction d'activation est l'une quelconque parmi une fonction sigmoïde, une fonction tanh, une fonction de relance ou une fonction softmax ;
une action de sondage, qui compare le vecteur de résultat intermédiaire avec un nombre aléatoire, et qui sort 1, s'il est plus grand que le nombre aléatoire, et qui sort 0, s'il est inférieur au nombre aléatoire ; ou
une action de regroupement, comprenant un max-pooling ou un pooling moyen. AVGPOOLING,
dans lequel le module d'arbre en H (4) forme un canal de données entre le module maître de calcul (5) et les modules esclaves de calcul multiples (6).

2. Dispositif selon la revendication 1, comprenant en outre :
une unité de mise en antémémoire (1) configurée pour lire des instructions via une unité d'accès direct à la mémoire et pour mettre les instructions lues en antémémoire,
l'unité d'accès direct à la mémoire (3) étant configurée pour écrire des données dans des unités de mise en antémémoire correspondantes du module maître de calcul (5) et des modules esclaves de calcul respectifs à partir d'un espace d'adresse externe ou pour lire des données dans les unités de mise en antémémoire et les mettre à l'espace d'adresse externe ;
dans lequel
l'unité de commande (2) est configurée pour lire des instructions dans l'unité de mise en antémémoire d'instructions.

3. Dispositif selon l'une quelconque des revendications 1 à 2, dans lequel les modules esclaves de calcul (6) comprennent une unité de mise en antémémoire de neurones d'entrée configurée pour stocker temporairement des données de neurones d'entrée.

4. Dispositif selon l'une quelconque des revendications 1 à 3, dans lequel le module d'arbre en H (4) comprend une structure d'un arbre en H, l'arbre en H est un canal d'arbre binaire formé par de multiples nœuds, chaque nœud transmettant les données en amont à deux noeuds en aval et épissant des données rendues par les deux noeuds en aval et les retournant au nœud en amont.

5. Dispositif selon l'une quelconque des revendications 1 à 4, dans lequel le module maître de calcul (5) comprend une unité opérationnelle (51), une unité de détermination de rapports de dépendance de données (52) et une unité de mise en antémémoire de neurones (53) ; dans lequel
l'unité de mise en antémémoire de neurones est configurée pour stocker temporairement des données d'entrée et des données de sortie utilisées par le module maître de calcul (5) dans le procédé de calcul ;
l'unité opérationnelle (51) est configurée pour recevoir un vecteur de gradient de sortie du module d'arbre en H et elle effectue plusieurs fonctionnalités opérationnelles du module maître de calcul ;
l'unité de détermination de rapports de dépendance de données (52) est un port pour l'unité opérationnelle pour lire/écrire dans l'unité de mise en antémémoire de neurones et elle assure qu'il n'y a pas de conflit de cohérence dans la lecture/l'écriture dans l'unité de mise en antémémoire de neurones, et elle est aussi responsable de transmettre le vecteur de neurones d'entrée lu dans l'unité de mise en antémémoire de neurones aux modules esclaves de calcul via le module d'arbre en H.

6. Dispositif selon l'une quelconque des revendications 1 à 5, dans lequel chaque module esclave de calcul (6) comprend une unité opérationnelle (61), une unité de détermination de rapports de dépendance de données (62), une unité de mise en antémémoire de neurones (63) et une unité de mise en antémémoire de poids (64), dans lequel l'unité opérationnelle (61) est configurée pour recevoir des micro-instructions transmises par l'unité de commande et pour effectuer des opérations logiques arithmétiques,
dans lequel l'unité de détermination de rapports de dépendance de données (62) est responsable des opérations de lecture et d'écriture dans l'unité de mise en antémémoire de neurones et dans l'unité de mise en antémémoire de poids dans le procédé de calcul en assurant qu'il n'y a pas de conflit de cohérence dans la lecture/l'écriture dans l'unité de mise en antémémoire de neurones et dans l'unité de mise en antémémoire de poids ;
l'unité de mise en antémémoire de neurones est configurée pour stocker temporairement les données de vecteur de neurones d'entrée et la valeur de neurone de sortie obtenues du calcul des modules esclaves de calcul ; et l'unité de mise en antémémoire de poids (64) est configurée pour stocker temporairement le vecteur de poids nécessaire pour les modules esclaves de calcul dans le procédé de calcul.

7. Dispositif selon la revendication 5 ou la revendication 6, dans lequel le procédé suivant est utilisé pour assurer qu'il n'y a pas de conflit de cohérence dans la lecture/l'écriture de données déterminer s'il y a une relation dépendante entre les données d'une micro-instruction, qui n'a pas été exécutée, et les données de la micro-instruction, qui a été exécutée, s'il n'y a pas de relation dépendante, permettre à la micro-instruction, qui n'a pas été exécutée, à être lancée immédiatement, sinon la micro-instruction, qui n'a pas été exécutée, n'est pas autorisée d'être lancée jusqu'à ce que l'exécution de toutes les micro-instructions, desquelles cette micro-instruction, qui n'a pas été exécutée, dépend, soit achevée.

8. Dispositif selon l'une quelconque des revendications 1 à 7, dans lequel les instructions comprennent :
une instruction CONFIG pour configurer plusieurs constants nécessaires dans l'opération de la couche actuelle avant que le calcul de réseaux neuronales artificiels de chaque couche commence ;
une instruction COMPUTE pour effectuer le calcul logique arithmétique de réseaux neuronales artificiels de chaque couche ;
une instruction IQ pour réaliser la lecture de données d'entrée nécessaires pour le calcul dans un espace d'adresses externe et pour stocker les données de nouveau dans l'espace d'adresses externe après que le calcul soit achevé ;
une instruction NOP pour vider les micro-instructions, qui sont actuellement stockées dans toutes les files de mise en mémoire temporaire internes, pour assurer que toutes les instructions avant l'instruction NOP sont exécutées ;
une instruction JUMP pour faire sauter l'adresse d'une instruction suivante à lire par la commande dans l'unité de mise en antémémoire d'instructions pour réaliser un saut du flux de commande ;
une instruction MOVE pour transférer des données à une adresse particulière dans l'espace d'adresses interne du dispositif à une autre adresse de l'espace d'adresses interne du dispositif.

9. Dispositif selon l'une quelconque des revendications 1 à 8, dans lequel le dispositif est configuré pour traîner un réseau neuronal artificiel à multi-couches en arrière.

10. Dispositif selon l'une quelconque des revendications 1 à 9, dans lequel au moins l'une parmi l'unité de mise en antémémoire d'instructions (1), l'unité de commande (2), l'unité d'accès direct à la mémoire (3), le module d'arbre en H (4), le module maître de calcul (5) et les modules esclaves de calcul (6) adopte ASIC.

11. Procédé pour effectuer un calcul en avant d'un réseau neuronal artificiel le procédé comprenant les étapes suivantes de :
lire, à l'aide d'une unité de commande (2), des instructions et décoder les instructions pour obtenir des micro-instructions pour commander un module d'arbre en H (4), un module maître de calcul (5) et des modules esclaves de calcul multiples (6) ;
le module maître de calcul (5) transmettant un vecteur de neurones d'entrée d'une couche du réseau neuronal artificiel via le module d'arbre en H (4) à tous les modules esclaves de calcul multiples (6) ;
les modules esclaves de calcul multiples (6) utilisant le même vecteur de neurones d'entrée et des vecteurs de poids respectivement différents pour calculer parallèlement des valeurs de neurones de sortie respectives ;
le module d'arbre en H (4) épissant, après que chacun des modules esclaves de calcul multiples (6) ait complété son calcul, les valeurs de neurone de sortie respectives des modules esclaves de calcul multiples étape par étape dans un vecteur de résultat intermédiaire ;
dans lequel le module maître de calcul (5) effectue l'une quelconque des actions suivantes avec le vecteur de résultat intermédiaire :
une action d'ajouter une tension, qui ajoute une tension au vecteur de résultat intermédiaire ;
activer le vecteur de résultat intermédiaire, dans lequel la fonction d'activation est l'une quelconque parmi une fonction sigmoïde, une fonction tanh, une fonction de relance ou une fonction softmax ;
une action de sondage, qui compare le vecteur de résultat intermédiaire avec un nombre aléatoire, et qui sort 1, s'il est plus grand que le nombre aléatoire,
et qui sort 0, s'il est inférieur au nombre aléatoire ; ou
une action de regroupement, comprenant un max-pooling ou un pooling moyen. AVGPOOLING,
dans lequel le module d'arbre en H (4) forme un canal de données entre le module maître de calcul (5) et les modules esclaves de calcul multiples (6)

12. Procédé selon la revendication 11, comprenant en outre les étapes de :
lire, à l'aide d'une unité de mise en antémémoire d'instructions, des instructions via une unité d'accès direct à la mémoire (3) et mettre les instructions lues en antémémoire,
écrire, à l'aide de l'unité d'accès direct à la mémoire (3) des données dans des unités de mise en antémémoire correspondantes du module maître de calcul et des modules esclaves de calcul respectifs à partir d'un espace d'adresse externe ou lire des données dans les unités de mise en antémémoire et les mettre à l'espace d'adresse externe ;
dans lequel l'unité de commande (2) lit des instructions dans l'unité de mise en antémémoire d'instructions.

13. Procédé selon l'une quelconque des revendications 11 à 12, dans lequel les modules esclaves de calcul (6) comprennent une unité de mise en antémémoire de neurones d'entrée configurée pour stocker temporairement des données de neurones d'entrée.

14. Procédé selon l'une quelconque des revendications 11 à 13, dans lequel le module d'arbre en H (4) comprend une structure d'un arbre en H, l'arbre en H est un canal d'arbre binaire formé par de multiples nœuds, chaque nœud transmettant les données en amont à deux noeuds en aval et épissant des données rendues par les deux noeuds en aval et les retournant au nœud en amont.

15. Procédé selon l'une quelconque des revendications 11 à 14, dans lequel une unité de mise en antémémoire de neurones (53) comprise par le module maître de calcul (5) stocke temporairement des données d'entrée et des données de sortie utilisées par le module maître de calcul dans le procédé de calcul ;
une unité opérationnelle (51) comprise par le module maître de calcul (5) reçoit un vecteur de gradient de sortie du module d'arbre en H et elle effectue plusieurs fonctionnalités opérationnelles du module maître de calcul ;
une unité de détermination de rapports de dépendance de données (52) comprise par le module maître de calcul (5) est un port pour l'unité opérationnelle pour lire/écrire dans l'unité de mise en antémémoire de neurones et elle assure qu'il n'y a pas de conflit de cohérence dans la lecture/l'écriture dans l'unité de mise en antémémoire de neurones, et elle est aussi responsable de transmettre le vecteur de neurones d'entrée lu dans l'unité de mise en antémémoire de neurones aux modules esclaves de calcul via le module d'arbre en H.

16. Procédé selon l'une quelconque des revendications 11 à 15, dans lequel une unité opérationnelle (61) comprise par les modules esclave de calcul (6) reçoit des micro-instructions transmises par l'unité de commande et effectue des opérations logiques arithmétiques ;
une unité de détermination de rapports de dépendance de données (62) comprise par les modules esclave de calcul (6) est responsable des opérations de lecture et d'écriture dans l'unité de mise en antémémoire de neurones et dans l'unité de mise en antémémoire de poids dans le procédé de calcul en assurant qu'il n'y a pas de conflit de cohérence dans la lecture/l'écriture dans l'unité de mise en antémémoire de neurones et dans l'unité de mise en antémémoire de poids ;
une unité de mise en antémémoire de neurones (63) comprise par les modules esclave de calcul (6) stocke temporairement les données de vecteur de neurones d'entrée et la valeur de neurone de sortie obtenues du calcul des modules esclaves de calcul ; et
une unité de mise en antémémoire de poids (64) comprise par les modules esclave de calcul (6) stocke temporairement le vecteur de poids nécessaire pour les modules esclaves de calcul dans le procédé de calcul.

17. Procédé selon la revendication 15 ou la revendication 16, dans lequel le procédé suivant est utilisé pour assurer qu'il n'y a pas de conflit de cohérence dans la lecture/l'écriture de données déterminer s'il y a une relation dépendante entre les données d'une micro-instruction, qui n'a pas été exécutée, et les données de la micro-instruction, qui a été exécutée, s'il n'y a pas de relation dépendante, permettre à la micro-instruction, qui n'a pas été exécutée, à être lancée immédiatement, sinon la micro-instruction, qui n'a pas été exécutée, n'est pas autorisée d'être lancée jusqu'à ce que l'exécution de toutes les micro-instructions, desquelles cette micro-instruction, qui n'a pas été exécutée, dépend, soit achevée.

18. Procédé selon l'une quelconque des revendications 11 à 17, dans lequel les instructions comprennent :
une instruction CONFIG pour configurer plusieurs constants nécessaires dans l'opération de la couche actuelle avant que le calcul de réseaux neuronales artificiels de chaque couche commence ;
une instruction COMPUTE pour effectuer le calcul logique arithmétique de réseaux neuronales artificiels de chaque couche ;
une instruction IQ pour réaliser la lecture de données d'entrée nécessaires pour le calcul dans un espace d'adresses externe et pour stocker les données de nouveau dans l'espace d'adresses externe après que le calcul soit achevé ;
une instruction NOP pour vider les micro-instructions, qui sont actuellement stockées dans toutes les files de mise en mémoire temporaire internes, pour assurer que toutes les instructions avant l'instruction NOP sont exécutées ;
une instruction JUMP pour faire sauter l'adresse d'une instruction suivante à lire par la commande dans l'unité de mise en antémémoire d'instructions pour réaliser un saut du flux de commande ;
une instruction MOVE pour transférer des données à une adresse particulière dans l'espace d'adresses interne du dispositif à une autre adresse de l'espace d'adresses interne du dispositif.
